(19) Europäisches Patentamt / European Patent Office / Office européen des brevets

(11) **EP 2 779 740 A1**

(12) **EUROPEAN PATENT APPLICATION**
published in accordance with Art. 153(4) EPC

(43) Date of publication:
**17.09.2014 Bulletin 2014/38**

(51) Int Cl.:
***H04W 28/16*** (2009.01)    ***H04W 16/28*** (2009.01)

(21) Application number: **12848147.0**

(22) Date of filing: **09.11.2012**

(86) International application number:
**PCT/JP2012/079090**

(87) International publication number:
**WO 2013/069760 (16.05.2013 Gazette 2013/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.11.2011 JP 2011246874**

(71) Applicant: **NTT DOCOMO, INC.**
**Chiyoda-ku**
**Tokyo 100-6150 (JP)**

(72) Inventors:
• **NAGATA, Satoshi**
**Tokyo 100-6150 (JP)**
• **KISHIYAMA, Yoshihisa**
**Tokyo 100-6150 (JP)**

(74) Representative: **HOFFMANN EITLE**
**Patent- und Rechtsanwälte**
**Arabellastrasse 4**
**81925 München (DE)**

(54) **WIRELESS COMMUNICATION SYSTEM, WIRELESS BASE STATION, USER EQUIPMENT, AND WIRELESS COMMUNICATION METHOD**

(57)     The present invention is designed such that, in a heterogeneous environment where the same cell identification information is used, it is possible to identify from which cell a downlink signal has arrived, in a user terminal, and thereby maintain the accuracy of reception. The radio communication method according to the present invention includes the steps of: at the radio base station apparatus: generating a demodulation reference signal sequence using a pseudo-random sequence including a user-specific parameter; and transmitting user-specific information for determining the user-specific parameter and the demodulation reference signal sequence to the user terminal; and at the user terminal: determining the user-specific parameter using the user-specific information for determining the user-specific user parameter transmitted from the radio base station apparatus, and identifying a demodulation reference signal sequence using a pseudo-random sequence that uses the user-specific parameter; and demodulating a received signal using the identified demodulation reference signal sequence.

FIG. 3

**Description**

Technical Field

The present invention relates to a radio communication system, a radio base station apparatus, a user terminal and a radio communication method that are applicable to a cellular system and so on.

Background Art

In the UMTS (Universal Mobile Telecommunications System) network, for the purposes of improving spectral efficiency and improving the data rates, system features based on W-CDMA (Wideband Code Division Multiple Access) are maximized by adopting HSDPA (High Speed Downlink Packet Access) and HSUPA (High Speed Uplink Packet Access). For this UMTS network, for the purposes of further increasing high-speed data rates, providing low delay and so on, long-term evolution (LTE) has been under study (non-patent literature 1).

In the third-generation system, it is possible to achieve a transmission rate of maximum approximately 2 Mbps on the downlink by using a fixed band of approximately 5 MHz. Meanwhile, in the LTE system, it is possible to achieve a transmission rate of about maximum 300 Mbps on the downlink and about 75 Mbps on the uplink by using a variable band that ranges from 1.4 MHz to 20 MHz. Furthermore, in the UMTS network, for the purpose of achieving further broadbandization and higher speed, successor systems of LTE have been under study (for example, LTE-Advanced (LTE-A)).

Now, as a promising technique for further improving the system performance of the LTE system, there is inter-cell orthogonalization. For example, in the LTE-A system, intra-cell orthogonalization is made possible by orthogonal multiple access on both the uplink and the downlink. That is to say, on the downlink, orthogonalization is provided between user terminal UEs (User Equipment) in the frequency domain. On the other hand, between cells, like in W-CDMA, interference randomization by repeating one-cell frequency is fundamental.

So, in the 3GPP (3rd Generation Partnership Project), the coordinated multiple-point transmission/reception (CoMP) technique is under study as a technique for realizing inter-cell orthogonalization. In this CoMP transmission/reception, a plurality of cells coordinate and perform signal processing for transmission and reception for one user terminal UE or for a plurality of user terminal UEs. For example, for the downlink, simultaneous transmission of a plurality of cells, and coordinated scheduling/beam forming, which adopt precoding, are under study. By adopting these CoMP transmission/reception techniques, improvement of throughput performance is expected, especially with respect to user terminal UEs located on cell edges.

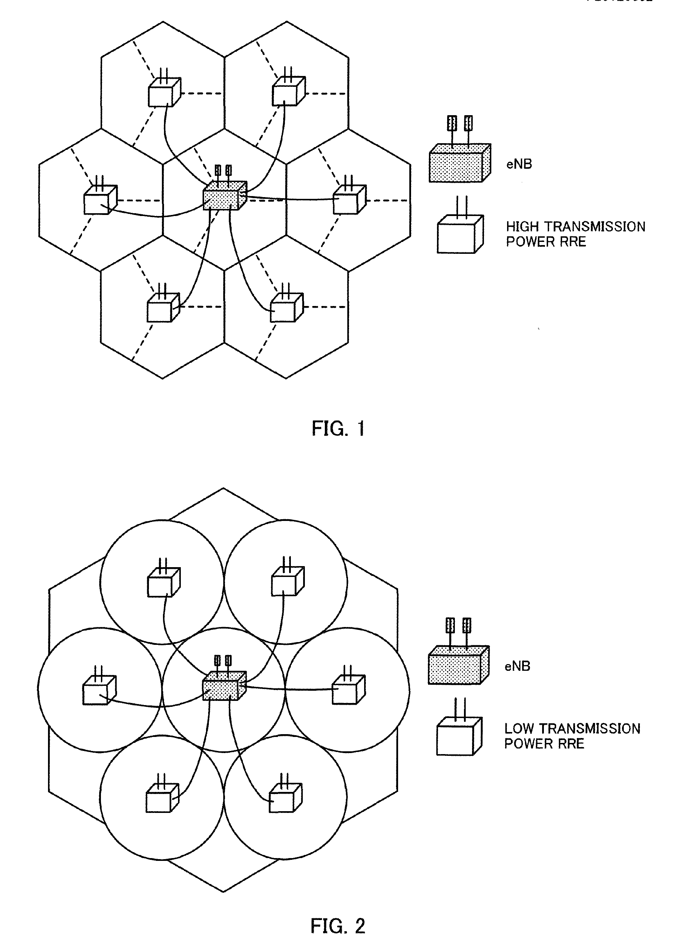

As an environment to adopt CoMP transmission/reception, there are, for example, a configuration (centralized control based on an RRE configuration) to include a plurality of remote radio equipment (RREs: Remote Radio Equipment) that are connected with a radio base station apparatus (radio base station apparatus eNB) by optical fiber and so on, and a configuration (autonomous distributed control based on an independent base station configuration) of a radio base station apparatus (radio base station apparatus eNB). In the RRE configuration, as shown in FIG. 1, remote radio equipment RREs are controlled in a centralized fashion in a radio base station apparatus eNB. In the RRE configuration, the radio base station apparatus eNB (central base station) that performs baseband signal processing and control for a plurality of remote radio equipment RREs, and each cell (that is, each remote radio equipment RRE), are connected by baseband signals using optical fiber, so that it is possible to execute radio resource control between cells in the central base station altogether. Consequently, in the RRE configuration, on the downlink, it is possible to adopt a method to use fast signal processing between cells such as simultaneous transmission of a plurality of cells. In FIG. 1, the transmission power of the remote radio equipment RREs is approximately the same as the transmission power of the radio base station apparatus (macro base station) eNB (high transmission power RREs).

Another environment to adopt CoMP transmission/reception is an overlay network environment (heterogeneous environment) that is formed by arranging a plurality of remote radio equipment RREs in the cover area of a radio base station apparatus (macro base station) eNB, as shown in FIG. 2. This environment may be an environment in which the cell of the macro base station eNB and the cells of the remote radio equipment RREs are different -- that is, the cell identification information (cell ID) of the macro base station eNB and the cell IDs of the remote radio equipment RREs are different (the first heterogeneous environment), and an environment in which the cell of the macro base station eNB and the cells of the remote radio equipment RREs are the same -- that is, the cell ID of the macro base station eNB and the cell IDs of the remote radio equipment RREs are the same (a second heterogeneous environment). In FIG. 2, the transmission power of the remote radio equipment RREs is lower than the transmission power of the radio base station apparatus (macro base station) eNB (low transmission power RREs).

Citation List

Non-Patent Literature

Non-Patent Literature 1: 3GPP, TR25.912 (V7.1.0), "Feasibility Study for Evolved UTRA and UTRAN," Sept. 2006

Summary of the Invention

Technical Problem

In the second heterogeneous environment, the cell ID of the macro base station eNB and the cell IDs of the remote radio equipment RREs are the same, so that handover is not necessary, and this can be considered to be a control environment that is simpler than the first heterogeneous environment. However, in the second heterogeneous environment, the cell of a macro base station eNB (the hexagonal cell in FIG. 2) and the cells of remote radio equipment RREs (the circular cells in FIG. 2) have no distinction, and therefore it is difficult to determine from which cell a downlink signal has arrived in a user terminal, thereby raising a problem of lowering the accuracy of reception. For example, if, in a user terminal, it is not possible to determine from which cell a reference signal sequence such as demodulation reference signals, channel state information reference signals and so on has been transmitted, there is a problem that the accuracy of demodulation and the accuracy of channel estimation become lower.

The present invention has been made in view of the above, and it is therefore an object of the present invention to provide a radio communication system, a radio base station apparatus, a user terminal and a radio communication method, whereby, even in a heterogeneous environment in which the same cell identification information is used, a user terminal is able to determine from which cell a downlink signal has arrived, and, by this means, maintain the accuracy of reception.

Solution to Problem

A radio communication system according to the present invention includes a radio base station apparatus and a user terminal that performs radio communication with the radio base station apparatus, and, in this radio communication system: the radio base station apparatus includes: a generating section that generates a demodulation reference signal sequence using a pseudo-random sequence including a user-specific parameter; and a transmission section that transmits user-specific information for determining the user-specific parameter and the demodulation reference signal sequence to the user terminal; and the user terminal includes: an identification section that determines the user-specific parameter using the user-specific information transmitted from the radio base station apparatus, and identifies a demodulation reference signal sequence using a pseudo-random sequence that uses the user-specific parameter; and a demodulation section that demodulates a received signal using the identified demodulation reference signal sequence.

A radio base station apparatus according to the present invention is a radio base station apparatus in a radio communication system including the radio base station apparatus and a user terminal that performs radio communication with the radio base station apparatus, and this radio base station apparatus includes: a generating section that generates a demodulation reference signal sequence using a pseudo-random sequence including a user-specific parameter; and a transmission section that transmits user-specific information for determining the user-specific parameter and the demodulation reference signal sequence to the user terminal.

A user terminal apparatus according to the present invention is a user terminal in a radio communication system including a radio base station apparatus and the user terminal that performs radio communication with the radio base station apparatus, and this user terminal includes: an identification section that determines a user-specific parameter using user-specific information for determining the user-specific parameter, transmitted from the radio base station apparatus, and identifies a demodulation reference signal sequence using a pseudo-random sequence that uses the user-specific parameter; and a demodulation section that demodulates a received signal using the identified demodulation reference signal sequence.

A radio communication method according to the present invention is a radio communication method in a radio communication system including a radio base station apparatus and a user terminal that performs radio communication with the radio base station apparatus, and this radio communication method includes the steps of: at the radio base station apparatus: generating a demodulation reference signal sequence using a pseudo-random sequence including a user-specific parameter; and transmitting user-specific information for determining the user-specific parameter and the demodulation reference signal sequence to the user terminal; and at the user terminal: determining the user-specific parameter using the user-specific information for determining the user-specific user parameter transmitted from the radio base station apparatus, and identifying a demodulation reference signal sequence using a pseudo-random sequence that uses the user-specific parameter; and demodulating a received signal using the identified demodulation reference signal sequence.

Technical Advantage of the Invention

According to the present invention, even in a heterogeneous environment in which the same cell identification information is used, a user terminal is able to determine from which cell a downlink signal has arrived, and, by this means, maintain the accuracy of reception.

Brief Description of the Drawings

FIG. 1 is a diagram to explain coordinated multiple point transmission;
FIG. 2 is a diagram to explain coordinated multiple point transmission;
FIG. 3 is a diagram to show the downlink in coordinated multiple point transmission;
FIG. 4 provides diagrams to explain an enhanced PDCCH;
FIG. 5 is a diagram to explain a system configuration of a radio communication system;
FIG. 6 is a diagram to explain an overall configuration of a radio base station apparatus;
FIG. 7 is a functional block diagram corresponding to a baseband processing section in a radio base station apparatus;
FIG. 8 is a diagram to explain an overall configuration of a user terminal; and
FIG. 9 is a functional block diagram corresponding to a baseband processing section of a user terminal.

Description of Embodiments

Now, embodiments of the present invention will be described below in detail with reference to the accompanying drawings.

First, downlink CoMP transmission will be described. Downlink CoMP transmission includes coordinated scheduling/coordinated beamforming, and joint processing. Coordinated scheduling/coordinated beamforming refers to a method of transmitting a shared data channel from only one cell to one user terminal UE, and allocates radio resources in the frequency/space domain, taking into account interference from other cells and interference against other cells. On the other hand, joint processing refers to a method of simultaneously transmitting shared data channels from a plurality of cells by adopting precoding, and includes joint transmission to transmit shared data channels from a plurality of cells to one user terminal UE, and dynamic point selection (DPS) to select one cell dynamically and transmit a shared data channel.

Application of CoMP transmission such as described above in an environment where the cell of the macro base station eNB and the cells of the remote radio equipment RREs are the same -- that is, the cell ID of the macro base station eNB and the cell IDs of the remote radio equipment RREs are the same (the second heterogeneous environment), will be considered. In this case, when a reference signal sequence (for example, a demodulation reference signal sequence (DM-RS sequence)) is generated, given that the cell ID of the macro base station eNB and the cell IDs of the remote radio equipment RREs are the same, there is a high possibility that the same reference signal sequence (DM-RS sequence) is applied between the macro base station eNB and a plurality of remote radio equipment RREs, and the reference signals (DM-RSs) are multiplexed on the same radio resources.

Here, reference signal sequences will be described. A DM-RS sequence r(m) is defined by following equation 1 (Release 10 LTE). The pseudo-random sequence c(i) that is included in this equation 1 is initialized as follows ($C_{init}$). As obvious from this initialized pseudo-random sequence $C_{init}$, a term that varies depending on the cell ID, $N_{ID}^{cell}$, is included in the initialized pseudo-random sequence $C_{init}$. Note that this pseudo-random sequence c(i) is generated using a length-31 Gold sequence. Also, in the initialized pseudo-random sequence $C_{init}$, scrambling identification information (SCID) is included. This SCID assumes the values of 0 and 1 (the beginning of each subframe). In this way, the pseudo-r(m) is set to vary depending on the cell ID.

[1]

$$r(m) = \frac{1}{\sqrt{2}}\left(1 - 2 \cdot c(2m)\right) + j\frac{1}{\sqrt{2}}\left(1 - 2 \cdot c(2m+1)\right), \qquad m = \begin{cases} 0,1,\ldots,12N_{\mathrm{RB}}^{\mathrm{max,DL}} - 1 & \mathrm{normal\, cyclic\, prefix} \\ 0,1,\ldots,16N_{\mathrm{RB}}^{\mathrm{max,DL}} - 1 & \mathrm{extended\, cyclic\, prefix} \end{cases}$$

$$\ldots \text{(Equation 1)}$$

Initialized pseudo-random sequence:

$$c_{\mathrm{init}} = \left(\lfloor n_s / 2 \rfloor + 1\right) \cdot \left(2 N_{\mathrm{ID}}^{\mathrm{cell}} + 1\right) \cdot 2^{16} + n_{\mathrm{SCID}}$$

$n_{\mathrm{SCID}}$: 0, 1 (the beginning of each subframe)
$N_{\mathrm{RB}}^{\mathrm{PDSCH}}$: the bandwidth of corresponding PDSCH transmission resource blocks
c(i): pseudo-random sequence (length-31 Gold sequence)

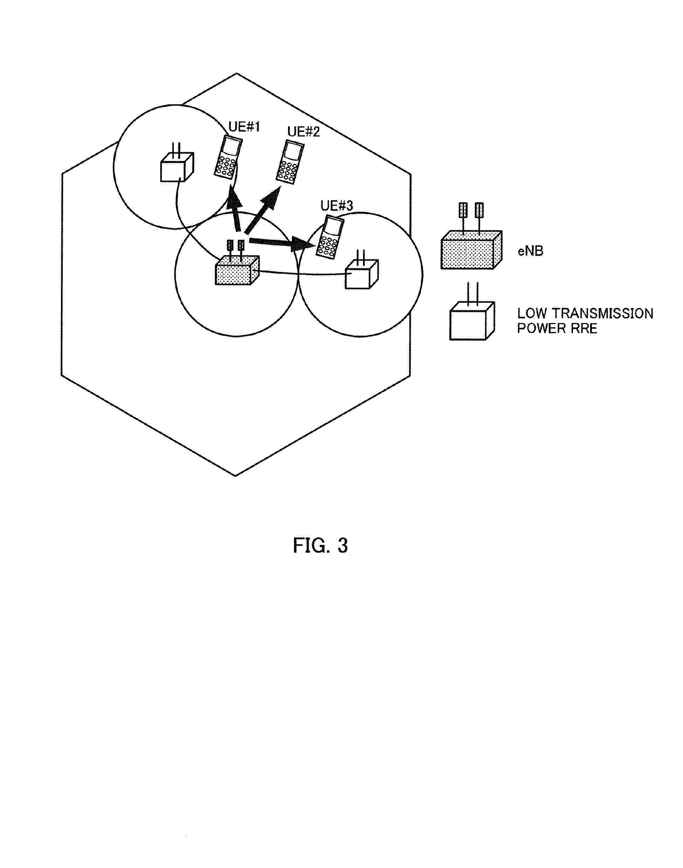

As described above, DM-RS sequences are generated using pseudo-random sequences to include a term that varies depending on the cell ID, so that, given that, in the second heterogeneous environment, the cell ID of the macro base station eNB and the cell IDs of the remote radio equipment RREs are the same, there is a high possibility that the same DM-RS sequence is applied between the macro base station eNB and a plurality of remote radio equipment RREs, and DM-RSs are multiplexed over the same radio resources. In a state like this, a user terminal has difficulty distinguishing between a downlink signal from the macro base station eNB and a downlink signal from the remote radio equipment RREs (collision of reference signals) (FIG. 3). Consequently, in the user terminal, there is a possibility that the accuracy of signal processing decreases. That is to say, a collision of DM-RSs has a threat of causing a decrease in the accuracy of DM-RS channel estimation and the accuracy of PDSCH demodulation.

The present inventors have focused on the fact that, since the pseudo-random sequence to be used upon generating a reference signal sequence includes a term that varies depending on the cell ID, there is a high possibility that a collision of reference signals is likely to occur in the second heterogeneous environment, and found out that it is possible to avoid a collision of reference signals in the second heterogeneous environment by using user-specific information -- for example, user identification information (UEID) -- in the pseudo-random sequence to be used upon generating a reference signal sequence.

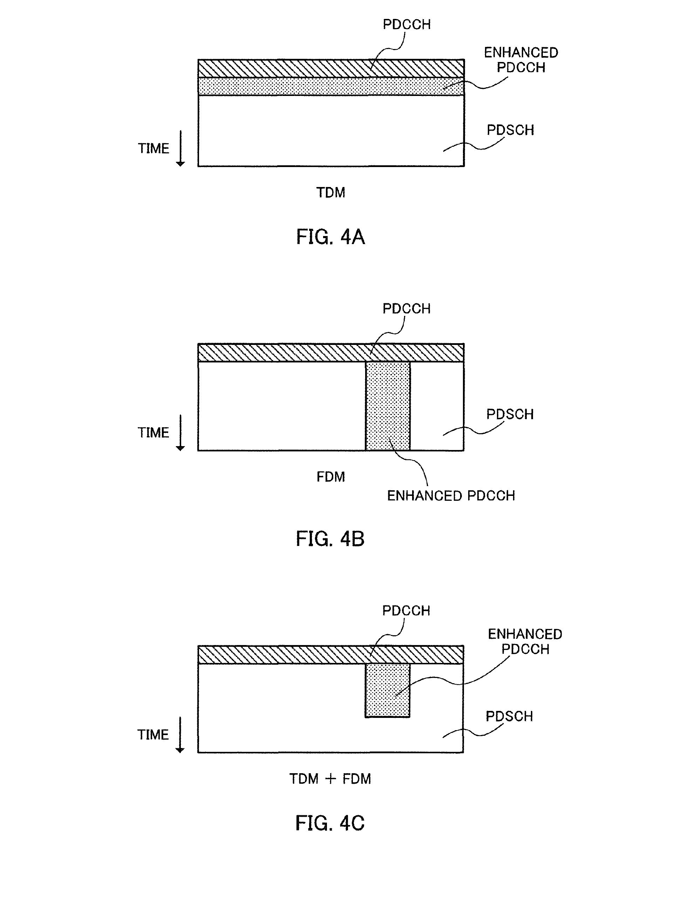

On the other hand, a control channel referred to as "enhanced PDCCH (Physical Downlink Control Channel)" is under study. The PDCCH is demodulated by the CRS (Cell-Specific Reference Signal), but the enhanced PDCCH is demodulated by the DM-RS. As for the enhanced PDCCH, there is the time division approach shown in FIG. 4A, the frequency division approach shown in FIG. 4B and the time division + frequency division approach shown in FIG. 4C.

Here, when trying to demodulate the enhanced PDCCH using the DM-RS, part of the information (for example, nSCID) for generating a DM-RS sequence is not known in a user terminal, and therefore, unless the DM-RS sequence is identified first, it is not possible to demodulate the enhanced PDCCH using that DM-RS sequence.

The present inventors have found out a method whereby, when a received signal is demodulated using a DM-RS sequence, the DM-RS sequence is identified in a user terminal. That is to say, in a radio base station apparatus, a DM-RS sequence is generated in advance using a pseudo-random sequence including a user-specific parameter, and user-specific information for determining this user-specific parameter and the DM-RS sequence are transmitted to a user terminal, and, in the user terminal, the user-specific parameter is determined using the user-specific information transmitted from the radio base station apparatus, the DM-RS sequence using the pseudo-random sequence to use this user-specific parameter is identified, and a received signal is demodulated using the identified DM-RS sequence. By this method, it is possible to identify the DM-RS sequence and perform demodulation using the DM-RS sequence. By this means, even when a received signal is demodulated using a DM-RS sequence in a heterogeneous environment where the same cell identification information is used, a user terminal is able to determine from which cell a downlink signal has arrived, and, by this means, maintain the accuracy of reception.

With the present invention, user-specific information is used in a pseudo-random sequence that is used upon generating a DM-RS sequence. This pseudo-random sequence to include a user-specific parameter may be the following four sequences.

(First Sequence)

The first sequence of the pseudo-random sequence of a DM-RS sequence is a sequence to use a user-specific parameter X, instead of a cell ID, in the pseudo-random sequence, as shown in following equation 2.

[2]

$$c_{\text{init}} = \left( \lfloor n_{\text{s}} / 2 \rfloor + 1 \right) \cdot \left( 2(X + 2^9) + 1 \right) \cdot 2^{16} + n_{\text{SCID}}$$

$$\ldots \text{(Equation 2)}$$

(Second Sequence)

The second sequence of the pseudo-random sequence of a DM-RS sequence is a sequence to add a user-specific parameter X to a cell ID in the pseudo-random sequence, as shown in following equation 3.

[3]

$$c_{\text{init}} = \left( \lfloor n_{\text{s}} / 2 \rfloor + 1 \right) \cdot \left( 2(N_{\text{ID}}^{\text{cell}} + 2^9 \cdot X) + 1 \right) \cdot 2^{16} + n_{\text{SCID}}$$
$$\ldots \text{(Equation 3)}$$

(Third Sequence)

The third sequence of the pseudo-random sequence of a DM-RS sequence is a sequence to use a user-specific parameter X, instead of SCID, in the pseudo-random sequence, as shown in following equation 4.

[4]

$$c_{\text{init}} = \left( \lfloor n_{\text{s}} / 2 \rfloor + 1 \right) \cdot \left( 2 N_{\text{ID}}^{\text{cell}} + 1 \right) \cdot 2^{16} + X$$

$$\ldots \text{(Equation 4)}$$

(Fourth Sequence)

The fourth sequence of the pseudo-random sequence of a DM-RS sequence is a sequence to add a user-specific parameter X in the pseudo-random sequence, as shown in following equation 5.

[5]

$$c_{\mathrm{init}} = \left(\lfloor n_{\mathrm{s}}/2\rfloor + 1\right)\cdot\left(2N_{\mathrm{ID}}^{\mathrm{cell}} + 1\right)\cdot 2^{16} + nSCID + 2X$$

$$\ldots \text{(Equation 5)}$$

The pseudo-random sequence of a DM-RS sequence may be a pseudo-random sequence to include a separate parameter Z, which is reported from a radio base station apparatus to a user terminal by higher layer signaling. As such pseudo-random sequences, there are a fifth sequence shown by following equation 6, a sixth sequence shown by following equation 7, a seventh sequence shown by following equation 8 and an eighth sequence shown by following equation 9.

[6]

$$c_{\mathrm{init}} = \left(\lfloor n_{\mathrm{s}}/2\rfloor + 1\right)\cdot\left(2(N_{\mathrm{ID}}^{\mathrm{cell}} + 2^{9}\cdot X + X\cdot Z) + 1\right)\cdot 2^{16} + nSCID$$

$$\ldots \text{(Equation 6)}$$

[7]

$$c_{\mathrm{init}} = \left(\lfloor n_{\mathrm{s}}/2\rfloor + 1\right)\cdot\left(2N_{\mathrm{ID}}^{\mathrm{cell}} + 1\right)\cdot 2^{16} + X + Z$$

$$\ldots \text{(Equation 7)}$$

[8]

$$c_{\mathrm{init}} = \left(\lfloor n_{\mathrm{s}}/2\rfloor + 1\right)\cdot\left(2N_{\mathrm{ID}}^{\mathrm{cell}} + 1\right)\cdot 2^{16} + nSCID + 2X + X\cdot Z$$

$$\ldots \text{(Equation 8)}$$

[9]

$$c_{\text{init}} = \left(\lfloor n_s / 2 \rfloor + 1\right) \cdot \left(2(N_{\text{ID}}^{\text{cell}} + 2^9 \cdot Z) + 1\right) \cdot 2^{16} + nSCID + X$$

... (Equation 9)

The user-specific parameter X in the above first sequence to the fourth sequence is not known in a user terminal. Consequently, it is necessary to report X from a radio base station apparatus or determine X in a user terminal. As this method, the following three methods may be possible.

(First Method)

The first method is a method of making the user-specific parameter X be a value to be determined by a user-specific channel state information reference signal (CSI-RS) configuration. That is to say, with the first method, the user-specific parameter is determined from a CSI-RS configuration. The value to be determined by the CSI-RS configuration may be, for example, the CSI-RS configuration index. This CSI-RS configuration index, which is user-specific information, is reported from a radio base station apparatus to a user terminal by higher layer signaling. Consequently, in the user terminal, the CSI-RS configuration index that is reported from the radio base station apparatus is used as the user-specific parameter X. By this means, the pseudo-random sequence is identified, so that it is possible to identify the DM-RS sequence. Consequently, it is possible to demodulate a received signal using the DM-RS sequence.

With the first method, it might occur that a plurality of CSI-RS configuration indices are reported. In this case, blind detection of received signals (the PDCCH signal, the PDSCH (Physical Downlink Shard Channel) signal and so on) is performed by separate DM-RS sequences in which all the CSI-RS configuration indices that are reported are used as the user-specific parameter X, and, based on these detection results, DM-RS sequences are identified (demodulated DM-RS sequences are selected) (the 1-1 method).

Alternatively, among a plurality of CSI-RS configuration indices that are reported, DM-RS sequences, in which CSI-RS configuration indices where the received quality (for example the received SINR (Signal Interference plus Noise Ratio)) measured by using the CSI-RS configuration is relatively high are used as the user-specific parameter X, are selected, blind detection of received signals (the PDCCH signal, the PDSCH signal and so on) is performed based on these DM-RS sequences, and, based on these detection results, DM-RS sequences are identified (demodulated DM-RS sequences are selected) (the 1-2 method). With the 1-2 method, when DM-RS sequences to subject to blind detection are selected, it is also possible to select DM-RS sequences, in which CSI-RS configuration indices where the received quality exceeds a predetermined threshold value are used as the user-specific parameter X, or it is equally possible to select DM-RS sequences in which a predetermined number of CSI-RS configuration indices, determined in descending order of received quality, are used as the user-specific parameter X. However, with the 1-2 method, when blind detection of received signals fails, it is then possible to perform blind detection of received signals by DM-RS sequences in which CSI-RS configuration indices which have low received quality (and which are therefore not selected) are used as the user-specific parameter X.

(Second Method)

The second method is a method of determining X by user-specific information that is included in the CSI-RS sequence (or that is derived from a CSI-RS sequence). That is to say, with the second method, user-specific information is determined from user-specific information that is included in the CSI-RS sequence. That is to say, the user-specific parameter X is determined using user-specific information that is included in the CSI-RS sequence. To be more specific, as shown in following equation 10, a user-specific term Y is added in a pseudo-random sequence, and the user-specific parameter X is determined using this term Y.

[10]

$$c_{\text{init}} = 2^{10} \cdot \left( 7 \cdot \left( n_{\text{s}} + 1 \right) + l + 1 \right) \cdot \left( 2 \cdot N_{\text{ID}}^{\text{cell}} + 1 \right) + 2 \cdot N_{\text{ID}}^{\text{cell}} + N_{\text{CP}} + Y$$

$$\ldots \ (\text{Equation 10})$$

The user-specific term Y included in this CSI-RS sequence is reported from a radio base station apparatus to a user terminal by higher layer signaling. Consequently, in the user terminal, the user-specific parameter X is determined based on the Y reported from the radio base station apparatus. By means of this user-specific Y, the user-specific parameter X is determiend, and, by this means, the pseudo-random sequence is identified, so that it is possible to identify the DM-RS sequence. Consequently, it is possible to demodulate received signals using the DM-RS sequence.

With the second method, it might occur that a plurality of user-specific Y's are reported. In this case, the user-specific parameter X is determined from all of the Y's that are reported, blind detection of received signals (the PDCCH signal, the PDSCH signal, and so on) is performed by DM-RS sequences using these user-specific parameter X's, and, based on these detection results, DM-RS sequences are identified (Demodulated DM-RS sequences are selected) (the 2-1 method).

Alternatively, DM-RS sequences using user-specific parameter X's that are determined from the Y's of CSI-RS sequences where the received quality is relatively high, in the received quality (for example, the received SINR) measured using separate CSI-RS sequences using a plurality of Y's that are reported, are selected, blind detection of received signals (the PDCCH signal, the PDSCH signal and so on) is performed by using these DM-RS sequences, and, based on these detection results, DM-RS sequences are identified (demodulated DM-RS sequences are selected) (the 2-2 method). With the 2-2 method, when DM-RS sequences to subject to blind detection are selected, it is possible to select DM-RS sequences, in which user-specific parameter X's that are determined from Y's where the received quality exceeds a predetermined threshold value are used, or it is equally possible to select DM-RS sequences in which user-specific parameter X's that are determined from the Y's of a predetermined number of CSI-RS sequences, determined in descending order of received quality, are used. However, with the 2-2 method, when blind detection of received signals fails, it is then also possible to perform blind detection of received signals by DM-RS sequences in which user-specific parameter X's that are determined from Y's corresponding to CSI-RS sequences which have low received quality (and which are therefore not selected) are used.

(Third Method)

The third method is a method of determining the user-specific parameter X by a combination (set) of a user-specific CSI-RS configuration and user-specific information that is included in the CSI-RS sequence (that is derived from the CSI-RS sequence). That is to say, according to the third method, user-specific information is determined from a set of a CSI-RS configuration and user-specific information that is included in the CSI-RS sequence. That is to say, the user-specific parameter X is determined using a CSI-RS configuration and user-specific information that is included in the CSI-RS sequence. The user-specific information that is included in the CSI-RS sequence is the same as the information used in the second method. As the CSI-RS configuration, there is the CSI-RS configuration index.

For example, this set of a user-specific CSI-RS configuration index and the user-specific term Y included in a CSI-RS sequence is reported from a radio base station apparatus to a user terminal by higher layer signaling. Consequently, in the user terminal, the user-specific parameter X is determined based on the set reported from the radio base station apparatus. By means of this user-specific set, the user-specific parameter X is determined, and, by this means, the pseudo-random sequence is identified, so that it is possible to identify the DM-RS sequence. Consequently, it is possible to demodulate received signals using the DM-RS sequence.

With the third method, it might occur that a plurality of user-specific sets are reported. In this case, the user-specific parameter X is determined from all of the sets that are reported, blind detection of received signals (the PDCCH signal, the PDSCH signal, and so on) is performed by DM-RS sequences using these user-specific parameter X's, and, based on these detection results, DM-RS sequences are identified (demodulated DM-RS sequences are selected) (the 3-1 method).

Alternatively, DM-RS sequences using user-specific parameter X's that are determined from sets where the received quality is relatively high, in the received quality (for example, the received SINR) measured using separate CSI-RS sequences using a plurality of sets that are reported, are selected, blind detection of received signals (the PDCCH signal, the PDSCH signal and so on) is performed by using these DM-RS sequences, and, based on these detection results, DM-RS sequences are identified (demodulated DM-RS sequences are selected) (the 3-2 method). With the 3-2 method, when DM-RS sequences to subject to blind detection are selected, it is also possible to select DM-RS sequences, in which user-specific parameter X's that are determined from sets where the received quality exceeds a predetermined threshold value are used, or it is equally possible to select DM-RS sequences in which user-specific parameter X's that are determined from a predetermined number of sets of CSI-RS sequences, determined in descending order of received quality, are used. However, with the 3-2 method, when blind detection of received signals fails, it is then also possible to perform blind detection of received signals by DM-RS sequences in which user-specific parameter X's that are determined from sets corresponding to CSI-RS sequences which have low received quality (and which are therefore not selected) are used.

The first method to the third method described above are applicable to any of the first sequence to the eighth sequence above.

(Fourth Method)

The term $n_{SCID}$ (scrambling identification information) that is included in the initialized pseudo-random sequence of above equation 1 is dynamically transmitted from a radio base station apparatus to a user terminal in a downlink control channel signal. When the pseudo-random sequence of above equation 1 is used, the value of the term $n_{SCID}$ is "0" or "1," and transmitted in one bit in downlink control information (DCI). When this term $n_{SCID}$ is not known in the user terminal, there is a possibility that the pseudo-random sequence cannot be identified. Consequently, this term $n_{SCID}$ is made a fixed value in advance (for example, $n_{SCID}=0$) (the 4-1 method), or blind detection of received signals (the PDCCH signal, the PDSCH signal and so on) is performed using DM-RSs using the term $n_{SCID}$, and DM-RS sequences are identified based on the detection results (the 4-2 method). Note that the fourth method is applied when the first sequence, the second sequence and the fourth sequence including the term $n_{SCID}$ are used.

When a DM-RS sequence is generated using the pseudo-random sequence shown in above equation 1, in the second heterogeneous environment shown in FIG. 3, the cell ID of the cell of the macro base station eNB and the cell IDs of the cells of the remote radio equipment RREs (low transmission power apparatuses) that are overlaid with that cell are the same, so that the same DM-RS sequence is used in user terminal UEs #1 to #3, and the possibility that the multiplexing positions of the DM-RSs become the same is high, so that a collision of DM-RSs occurs, and it becomes difficult, in the user terminal UEs, to distinguish between a downlink signal from the macro base station eNB and a downlink signal from the remote radio equipment RREs. Due to this, there is a threat that a decrease in the accuracy of DM-RS channel estimation and the accuracy of PDSCH demodulation is caused. On the other hand, when a DM-RS sequence is generated using the pseudo-random sequences of the above first sequence to the fourth sequence, in the second heterogeneous environment shown in FIG. 3, although the cell ID of the cell of the macro base station eNB and the cell IDs of the cells of the remote radio equipment RREs that are overlaid with that cell are the same, user terminal UEs #1 to #3 all have varying UEIDs, so that different DM-RS sequences are used between user terminal UEs #1 to #3, and the possibility that the multiplexing positions of the DM-RSs become the same is low. Consequently, a collision of DM-RSs does not occur, and it becomes easy to distinguish between a downlink signal from the macro base station eNB and a downlink signal from the remote radio equipment RREs in a user terminal UE. As a result of this, it is possible to maintain the accuracy of DM-RS channel estimation and the accuracy of PDSCH demodulation.

In particular, with the present invention, a DM-RS sequence to include user-specific information is used to report that user-specific information to a user terminal, so that it is possible to identify the DM-RS sequence in the user terminal, and prevent a case where demodulation is not possible when demodulating a received signal using the DM-RS sequence.

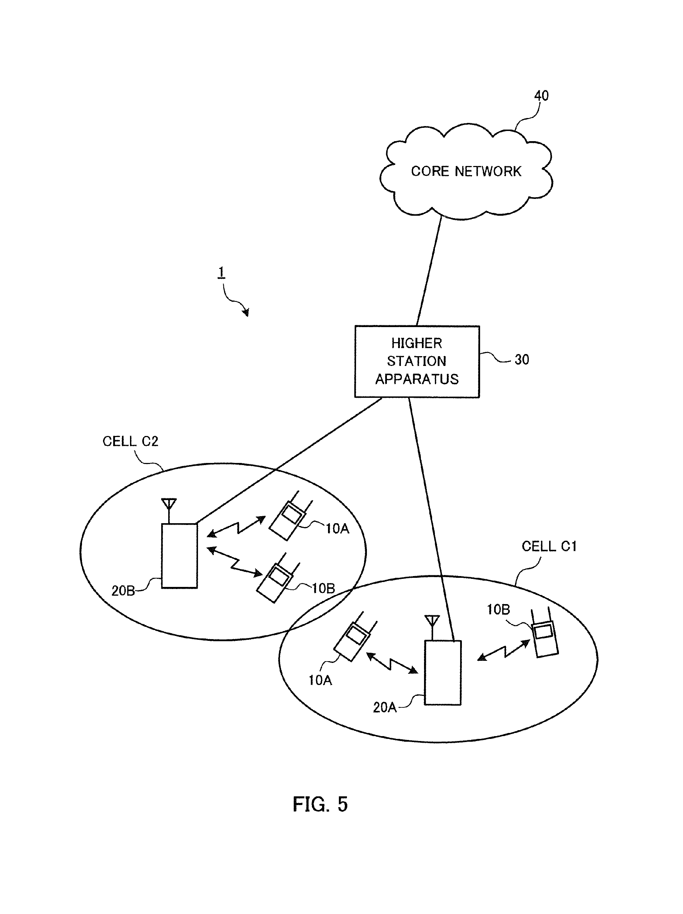

Now, a radio communication system according to an embodiment of the present invention will be described in detail. FIG. 5 is a diagram to explain a system configuration of a radio communication system according to the present embodiment. This radio communication system includes radio base station apparatuses, and user terminals that perform radio communication with these radio base station apparatuses. Note that the radio communication system shown in FIG. 5 is a system to accommodate, for example, the LTE system or SUPER 3G. In this radio communication system, carrier aggregation, which groups a plurality of fundamental frequency blocks into one, where the system band of the LTE system is one unit, is used. Also, this radio communication system may be referred to as "IMT-Advanced" or may be referred to as "4G."

As shown in FIG. 5, the radio communication system 1 is configured to include radio base station apparatuses 20A and 20B, and a plurality of the first and second user terminals 10A and 10B that communicate with these radio base station apparatuses 20A and 20B. The radio base station apparatuses 20A and 20B are connected with a higher station apparatus 30, and this higher station apparatus 30 is connected with a core network 40. Also, the radio base station apparatuses 20A and 20B are connected with each other by wire connection or by wireless connection. The first and second user terminals 10A and 10B are able to communicate with the radio base station apparatuses 20A and 20B in cell C1 and cell C2. Note that the higher station apparatus 30 includes, for example, an access gateway apparatus, a radio network controller (RNC), a mobility management entity (MME) and so on, but is by no means limited to these. Note that, between cells, CoMP transmission is controlled by a plurality of radio base station apparatuses and low transmission power apparatuses, when necessary.

Although the first and second user terminals 10A and 10B may be either LTE terminals or LTE-A terminals, the following description will be given simply with respect to the first and second user terminals, unless specified otherwise. Also, although the first and the second user terminals 10A and 10B perform radio communication with the radio base station apparatuses 20A and 20B for ease of explanation, more generally, user apparatuses (UEs) including user terminals and fixed terminal apparatuses may be used as well.

In the radio communication system 1, for radio access schemes, OFDMA (Orthogonal Frequency Division Multiple Access) is adopted on the downlink, and SC-FDMA (Single-Carrier Frequency Division Multiple Access) is adopted on the uplink, but the uplink radio access scheme is by no means limited to this. OFDMA is a multi-carrier transmission scheme to perform communication by dividing a frequency band into a plurality of narrow frequency bands (subcarriers) and mapping data to each subcarrier. SC-FDMA is a single carrier transmission scheme to reduce interference between terminals by dividing, per terminal, the system band into bands formed with one or continuous resource blocks, and allowing a plurality of terminals to use mutually different bands.

The downlink communication channels include a PDSCH, which is used by the first and second user terminals 10A and 10B on a shared basis as a downlink data channel, and downlink L1/L2 control channels (PDCCH, PCFICH, PHICH). Transmission data and higher control information are transmitted by the PDSCH. PDSCH and PUSCH scheduling information and so on are transmitted by the PDCCH. The number of OFDM symbols to use for the PDCCH is transmitted by the PCFICH (Physical Control Format Indicator Channel). HARQ ACK and NACK for the PUSCH are transmitted by the PHICH (Physical Hybrid-ARQ Indicator Channel).

The uplink communication channels include a PUSCH (Physical Uplink Shared Channel), which is used by user terminals on a shared basis as an uplink data channel, and a PUCCH (Physical Uplink Control Channel), which is an uplink control channel. By means of this PUSCH, transmission data and higher control information are transmitted. Furthermore, the PUCCH transmits downlink received quality information (CQI), ACK/NACK, and so on.

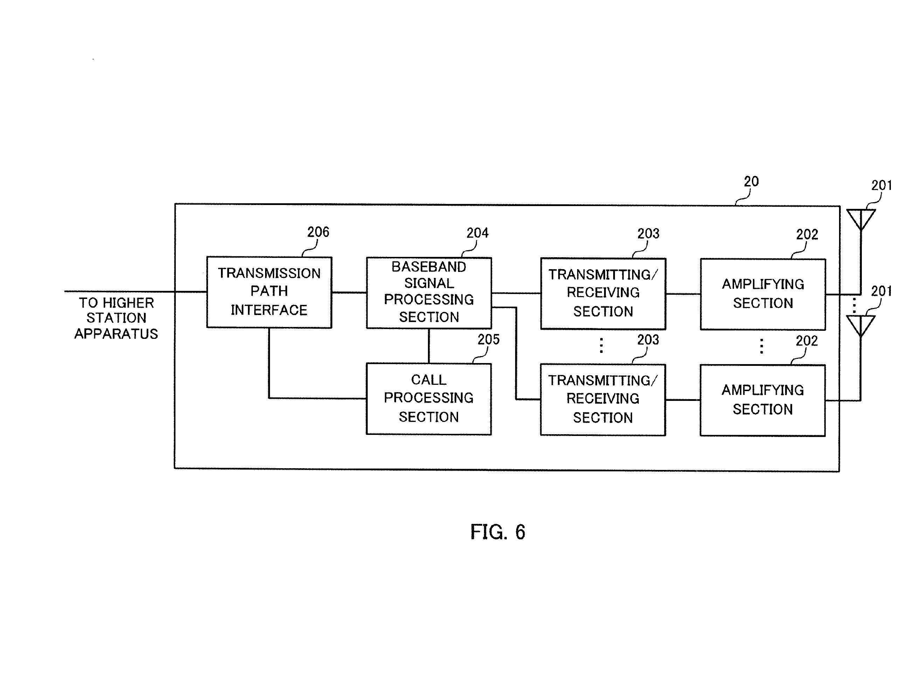

Referring to FIG. 6, an overall configuration of a radio base station apparatus according to the present embodiment will be described. Note that the radio base station apparatuses 20A and 20B have the same configuration and therefore hereinafter will be described simply as "radio base station apparatus 20." Also, the first and second user terminals 10A and 10B, which will be described later, also have the same configuration and therefore hereinafter will be described simply as "user terminal 10." The radio base station apparatus 20 includes transmitting/receiving antennas 201, amplifying sections 202, transmitting/receiving sections (reporting sections) 203, a baseband signal processing section 204, a call processing section 205, and a transmission path interface 206. Transmission data to be transmitted from the radio base station apparatus 20 to the user terminal on the downlink is input from the higher station apparatus 30, into the baseband signal processing section 204, via the transmission path interface 206.

In the baseband signal processing section 204, a downlink data channel signal is subjected to PDCP layer processes, division and coupling of transmission data, RLC (Radio Link Control) layer transmission processes such as an RLC retransmission control transmission process, MAC (Medium Access Control) retransmission control, including, for example, a HARQ transmission process, scheduling, transport format selection, channel coding, an inverse fast Fourier transform (IFFT) process, and a precoding process. Furthermore, as for the signal of the physical downlink control channel, which is a downlink control channel, transmission processes such as channel coding and an inverse fast Fourier transform are performed.

Also, the baseband signal processing section 204 reports control information for allowing each user terminal 10 to perform radio communication with the radio base station apparatus 20, to the user terminals 10 connected to the same cell, by a broadcast channel. Information for communication in the cell includes, for example, the system bandwidth on the uplink or the downlink, identification information of a root sequence (root sequence index) for generating signals of random access preambles of the PRACH (Physical Random Access Channel), and so on.

Baseband signals that are output from the baseband signal processing section 204 are converted into a radio frequency band in the transmitting/receiving sections 203. The amplifying sections 202 amplify the radio frequency signals subjected to frequency conversion, and output the results to the transmitting/receiving antennas 201. Note that the transmitting/receiving sections 203 constitute a receiving means to receive uplink signals including information about phase differences between a plurality of cells and PMIs, and a transmitting means to transmit user-specific information and DM-RS sequences to a user terminal.

On the other hand, as for signals to be transmitted from the user terminal 10 to the radio base station apparatus 20 on the uplink, radio frequency signals that are received in the transmitting/receiving antennas 201 are amplified in the amplifying sections 202, converted into baseband signals by frequency conversion in the transmitting/receiving sections 203, and input in the baseband signal processing section 204.

The baseband signal processing section 204 performs an FFT (Fast Fourier Transform) process, an IDFT (Inverse Discrete Fourier Transform) process, error correction decoding, a MAC retransmission control receiving process, and RLC layer and PDCP layer receiving processes, of the transmission data that is included in the baseband signal received on the uplink. The decoded signal is transferred to the higher station apparatus 30 through the transmission path interface 206.

The call processing section 205 performs call processing such as setting up and releasing communication channels, manages the state of the radio base station apparatus 20 and manages the radio resources.

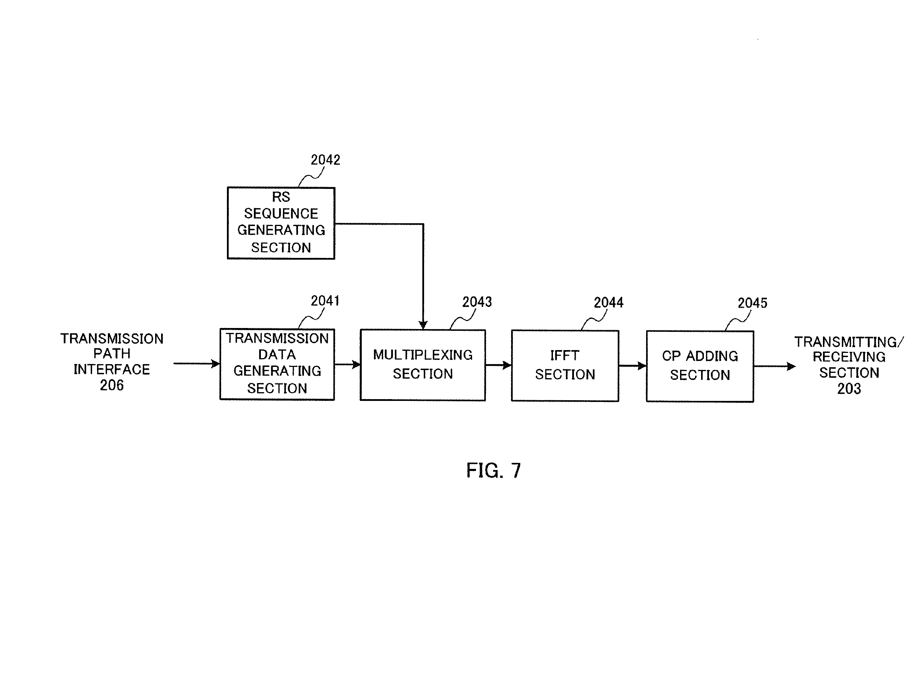

FIG. 7 is a block diagram to show a configuration of a baseband signal processing section in the radio base station apparatus shown in FIG. 6. The baseband signal processing section 204 is mainly formed with a transmission data generating section 2041, an RS sequence generating section 2042, a multiplexing section 2043, an IFFT (Inverse Fast Fourier Transform) section 2044, and a CP (Cyclic Prefix) adding section 2045.

The transmission data generating section 2041 applies error correction coding and interleaving to the symbol sequence of transmission data. After having performed error correction coding and interleaving of transmission data, the transmission data generating section 2041 performs a serial-to-parallel conversion of the transmission data sequence (n bits to constitute one OFDM symbol) and generates a plurality of sequences of data signals for subcarrier modulation. It is equally possible to generate a plurality of sequences of data signals and apply interleaving. The transmission data generating section 2041 further performs subcarrier modulation of the plurality of sequences of data signals in parallel.

The RS sequence generating section 2042 generates a DM-RS sequence using a pseudo-random sequence including a user-specific parameter. When a reference signal sequence is a DM-RS sequence, the RS sequence generating section 2042 generates the DM-RS in a DM-RS sequence using one of the pseudo-random sequences of the first sequence to the eighth sequence shown in above equation 2 to equation 9. Also, the RS sequence generating section 2042 generates a CSI-RS sequence. In particular, in the second method and the third method, the RS sequence generating section 2042 generates a CSI-RS sequence using, for example, the pseudo-random sequence shown in above equation 6.

The multiplexing section 2043 multiplexes the transmission data and the RSs over radio resources. The IFFT section 2044 performs an inverse fast Fourier transform of the frequency domain transmission signal (subcarrier signal) where the transmission data and the RSs are mapped to the subcarriers. The signal of frequency components allocated to the subcarriers by an inverse fast Fourier transform is converted into a signal sequence of time components. After that, cyclic prefixes are added in the CP adding section 2045.

The radio base station apparatus 20 semi-statically reports (transmits), by higher layer signaling (for example, RRC signaling), to a user terminal, user-specific information for determining the user-specific parameter -- that is, CSI-RS configuration information (for example, the CSI-RS configuration index) according to the first method, user-specific information that is included in the CSI-RS sequence (information that is included in a pseudo-random sequence) according to the second method, and a set of CSI-RS configuration information and user-specific information that is included in the CSI-RS sequence according to the third method.

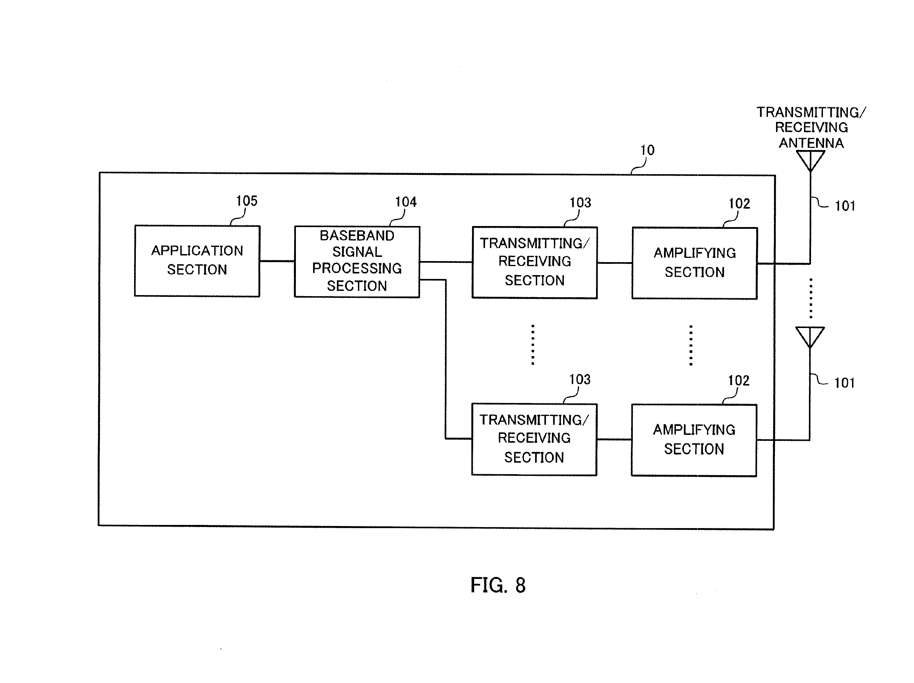

Next, referring to FIG. 8, an overall configuration of a user terminal according to the present embodiment will be described. An LTE terminal and an LTE-A terminal have the same hardware configurations in principle parts, and therefore will be described indiscriminately. A user terminal 10 has transmitting/receiving antennas 101, amplifying sections 102, transmitting/receiving sections (receiving sections) 103, a baseband signal processing section 104, and an application section 105.

As for downlink data, radio frequency signals that are received in the transmitting/receiving antennas 101 are amplified in the amplifying sections 102, and subjected to frequency conversion and converted into baseband signals in the transmitting/receiving sections 103. The baseband signals are subjected to receiving processes such as an FFT process, error correction decoding and retransmission control, in the baseband signal processing section 104. In this downlink data, downlink transmission data is transferred to the application section 105. The application section 105 performs processes related to higher layers above the physical layer and the MAC layer. Also, in the downlink data, broadcast information is also transferred to the application section 105.

Meanwhile, uplink transmission data is input from the application section 105 into the baseband signal processing section 104. The baseband signal processing section 104 performs a mapping process, a retransmission control (HARQ) transmission process, channel coding, a DFT (Discrete Fourier Transform) process, and an IFFT process. The baseband signals that are output from the baseband signal processing section 104 are converted into a radio frequency band in the transmitting/receiving sections 103. After that, the amplifying sections 102 amplify the radio frequency signals having been subjected to frequency conversion, and transmit the results from the transmitting/receiving antennas 101. Note that the transmitting/receiving sections 103 constitute a receiving means to receive downlink signals.

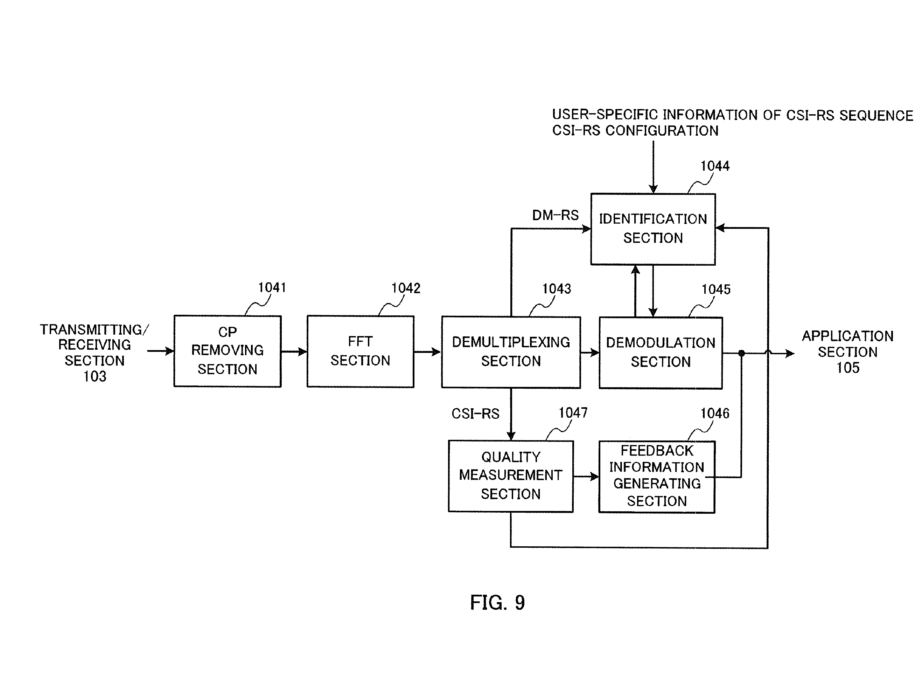

FIG. 9 is a block diagram showing a configuration of a baseband signal processing section in the user terminal shown in FIG. 8. The baseband signal processing section 104 is mainly formed with a CP removing section 1041, an FFT section 1042, a demultiplexing section 1043, an identification section 1044, a demodulation section 1045, a feedback information generating section 1046, and a quality measurement section 1047.

The CP removing section 1041 removes the cyclic prefixes from the received signal. The FFT section 1042 performs a fast Fourier transform of the received signal, from which the CPs have been removed, and converts the time-sequence signal components into a sequence of frequency components. The demultiplexing section 1043 demaps the received signal from the subcarriers and demultiplexes the RSs and the shared channel signal (data signal). The DM-RS is output to the identification section 1044.

The identification section 1044 determines the user-specific parameter using user-specific information transmitted from the radio base station apparatus 20, and identifies the DM-RS sequence using the pseudo-random sequence that uses this user-specific parameter. The identification section 1044 receives as input the user-specific information that is reported from the radio base station apparatus, so that the user-specific parameter is determined from the user-specific information, a pseudo-random sequence is prepared using that user-specific parameter, and the DM-RS sequence is determined using that pseudo-random sequence. This DM-RS sequence is a user-specific sequence, and therefore the DM-RS sequence is identified. Also, when the identification section 1044 performs blind detection according to the first method to the fourth method, the identification section 1044 identifies the DM-RS sequence, including the blind detection results. The identified DM-RS sequence is output to the demodulation section 1045. Also, the identification section 1044 selects the DM-RS sequences to subject to blind detection based on received quality, according to the 1-2 method, the 2-2 method and the 3-2 method.

Here, the user-specific information is CSI-RS configuration information (for example, the CSI-RS configuration index) according to the first method, user-specific information (information that is included in a pseudo-random sequence) to be included in a CSI-RS sequence according to the second method, and a set of CSI-RS configuration information and user-specific information that is included in the CSI-RS sequence according to the third method. Also, with the fifth sequence to the eighth sequence, Z may be used as well as user-specific information.

The demodulation section 1045 performs channel estimation using the DM-RS sequences identified in the identification section 1044, and demodulates the received signals (the PDCCH signal, the PDSCH signal and so on) using the channel estimation values acquired. When performing blind detection according to the first method to the fourth method, the demodulation section 1045 feeds back the blind detection results to the identification section 1044.

The quality measurement section 1047 measures the received quality (for example, the SINR) using the CSI-RS. The quality measurement section 1047 outputs the measured received quality to the feedback information generating section 1046. Also, the quality measurement section 1047 feeds back the measured received quality to the identification section 1044 according to the 1-2 method, the 2-2 method and the 3-2 method.

The feedback information generating section 1046 generates CSI (feedback information) based on the quality measurement value. As CSIs, there are cell-specific CSI (PMI, CDI, CQI), inter-cell CSI (phase difference information, amplitude difference information), RI (Rank Indicator) and so on. These CSI are fed back to the radio base station apparatus by the PUCCH and the PUSCH.

In the radio communication system having the above configuration, first, the RS sequence generating section 2042 of the radio base station apparatus generates a DM-RS sequence using a pseudo-random sequence including a user-specific parameter. This DM-RS sequence is transmitted to the user terminal. Also, the radio base station apparatus 20 semi-statically reports (transmits), by higher layer signaling (for example, RRC signaling), to a user terminal, user-specific information for determining the user-specific parameter -- that is, CSI-RS configuration information (for example, the CSI-RS configuration index) according to the first method, user-specific information that is included in the CSI-RS sequence (information that is included in a pseudo-random sequence) according to the second method, and a set of CSI-RS configuration information and user-specific information that is included in the CSI-RS sequence according to the third method.

Next, the identification section 1044 of the user terminal determines the user-specific parameter using the user-specific information transmitted from the radio base station apparatus 20, and identifies the DM-RS sequence using the pseudo-random sequence that uses this user-specific parameter. The user-specific information is CSI-RS configuration information (for example, the CSI-RS configuration index) according to the first method, user-specific information (information that is included in a pseudo-random sequence) to be included in a CSI-RS sequence according to the second method, and a set of CSI-RS configuration information and user-specific information that is included in the CSI-RS sequence according to the third method. Also, with the fifth sequence to the eighth sequence, a term Z in a pseudo random sequence may be used as user-specific information. Also, with the first method to the fourth method, when blind detection is performed, the result of this blind detection is fed back to the identification section 1044, and, in the identification section 1044, a DM-RS sequence is identified taking into account the blind detection result. Furthermore, with the 1-2 method, the 2-2 method and the 3-2 method, received quality that is measured is fed back to the identification section 1044, and, in the identification section 1044, the DM-RS sequences to subject to blind detection are selected taking into account the received quality. In each user terminal, the demodulation section 1045 demodulates the data using the DM-RS sequences identified this way.

In such control, if DM-RS sequences that are generated using the pseudo-random sequences shown in above equations 2 to 9 are used, in the second heterogeneous environment, the cell ID of the cell of a macro base station eNB and the cell IDs of the cells of remote radio equipment RREs that are overlaid with that cell are the same, but each user terminal UE has a varying UEID, so that varying DM-RS sequence or CSI-RS sequence are used on a per user terminal UE basis, and the possibility that the multiplexing positions of the DM-RSs or CSI-RSs become the same decreases. Consequently, a collision of DM-RSs or CSI-RSs does not occur, and it becomes easy to distinguish between a downlink signal from a macro base station eNB and a downlink signal from remote radio equipment RREs in a user terminal UE. As a result of this, it is possible to maintain the accuracy of DM-RS or CSI-RS channel estimation, the accuracy of PDSCH demodulation and the accuracy of CSI. Also, a DM-RS sequence including user-specific information is used and that user-specific information is reported to the user terminal, so that it is possible to identify the DM-RS sequence in the user terminal, and, consequently, prevent a case where demodulation is not possible when demodulating a received signal using the DM-RS sequence.

Now, although the present invention has been described in detail with reference to the above embodiments, it should be obvious to a person skilled in the art that the present invention is by no means limited to the embodiments described herein. The present invention can be implemented with various corrections and in various modifications, without departing from the spirit and scope of the present invention defined by the recitations of the claims. Consequently, the descriptions herein are provided only for the purpose of explaining examples, and should by no means be construed to limit the present invention in any way.

The disclosure of Japanese Patent Application No. 2011-246874, filed on November 10, 2011, including the specification, drawings and abstract, is incorporated herein by reference in its entirety.

**Claims**

1. A radio communication system comprising a radio base station apparatus and a user terminal that performs radio communication with the radio base station apparatus, wherein:

    the radio base station apparatus comprises:

        a generating section that generates a demodulation reference signal sequence using a pseudo-random sequence including a user-specific parameter; and
        a transmission section that transmits user-specific information for determining the user-specific parameter and the demodulation reference signal sequence to the user terminal; and

    the user terminal comprises:

        an identification section that determines the user-specific parameter using the user-specific information transmitted from the radio base station apparatus, and identifies a demodulation reference signal sequence using a pseudo-random sequence that uses the user-specific parameter; and
        a demodulation section that demodulates a received signal using the identified demodulation reference signal sequence.

2. The radio communication system according to claim 1, wherein the user-specific information is determined from a user-specific channel state information reference signal configuration and/or user-specific information that is included in a channel state information reference signal sequence.

3. The radio communication system according to one of claim 1 and claim 2, wherein, when there are a plurality of candidates for the user-specific information, the user terminal performs blind detection using demodulation reference signal sequences using user-specific parameters determined from the user-specific information, and, based on the results, identifies the demodulation reference signal sequence.

4. The radio communication system according to claim 2, wherein, when there are a plurality of candidates for the user-specific information, the user terminal performs blind detection using demodulation reference signal sequences using user-specific parameters that are determined from user-specific information corresponding to channel state information reference signals where received quality is relatively high, and, based on the results, identifies the demodulation reference signal sequence.

5. The radio communication system according to claim 1, wherein the pseudo-random sequence includes scrambling identification information.

6. The radio communication system according to claim 5, wherein the scrambling identification information is a fixed value.

7. The radio communication system according to claim 5, wherein blind detection is performed using the demodulation reference signal sequence using the scrambling identification information, and, based on the result, the demodulation reference signal sequence is identified.

8. The radio communication system according to claim 1, wherein an overlay network is formed by arranging a plurality of low transmission power apparatuses in a cover area of a macro base station, and cell identification information of the macro base station and cell identification information of the low transmission power apparatuses are the same.

9. A radio base station apparatus in a radio communication system comprising the radio base station apparatus and a user terminal that performs radio communication with the radio base station apparatus, the radio base station apparatus comprising:

a generating section that generates a demodulation reference signal sequence using a pseudo-random sequence including a user-specific parameter; and
a transmission section that transmits user-specific information for determining the user-specific parameter and the demodulation reference signal sequence to the user terminal.

10. A user terminal in a radio communication system comprising a radio base station apparatus and the user terminal that performs radio communication with the radio base station apparatus, the user terminal comprising:

an identification section that determines a user-specific parameter using user-specific information for determining the user-specific parameter, transmitted from the radio base station apparatus, and identifies a demodulation reference signal sequence using a pseudo-random sequence that uses the user-specific parameter; and
a demodulation section that demodulates a received signal using the identified demodulation reference signal sequence.

11. A radio communication method in a radio communication system comprising a radio base station apparatus and a user terminal that performs radio communication with the radio base station apparatus, the radio communication method comprising the steps of:

at the radio base station apparatus:

generating a demodulation reference signal sequence using a pseudo-random sequence including a user-specific parameter; and
transmitting user-specific information for determining the user-specific parameter and the demodulation reference signal sequence to the user terminal; and

at the user terminal:

determining the user-specific parameter using the user-specific information for determining the user-specific user parameter transmitted from the radio base station apparatus, and identifying a demodulation reference signal sequence using a pseudo-random sequence that uses the user-specific parameter; and
demodulating a received signal using the identified demodulation reference signal sequence.

eNB

HIGH TRANSMISSION
POWER RRE

FIG. 1

eNB

LOW TRANSMISSION
POWER RRE

FIG. 2

UE#1    UE#2

UE#3

eNB

LOW TRANSMISSION
POWER RRE

FIG. 3

PDCCH

ENHANCED
PDCCH

PDSCH

TIME

TDM

## FIG. 4A

PDCCH

PDSCH

TIME

FDM

ENHANCED PDCCH

## FIG. 4B

PDCCH

ENHANCED
PDCCH

PDSCH

TIME

TDM + FDM

## FIG. 4C

40

CORE NETWORK

1

HIGHER
STATION
APPARATUS

30

CELL C2

20B

10A

10B

CELL C1

10B

10A

20A

FIG. 5

FIG. 6

FIG. 7

EP 2 779 740 A1

TRANSMITTING/
RECEIVING
ANTENNA

10

105

104

103

102

| APPLICATION SECTION | BASEBAND SIGNAL PROCESSING SECTION | TRANSMITTING/ RECEIVING SECTION | AMPLIFYING SECTION |

101

103

102

| TRANSMITTING/ RECEIVING SECTION | AMPLIFYING SECTION |

101

FIG. 8

USER-SPECIFIC INFORMATION OF CSI-RS SEQUENCE
CSI-RS CONFIGURATION

TRANSMITTING/
RECEIVING
SECTION
103

CP
REMOVING
SECTION
1041

FFT
SECTION
1042

DEMULTIPLEXING
SECTION
1043

DM-RS

IDENTIFICATION
SECTION
1044

DEMODULATION
SECTION
1045

APPLICATION
SECTION
105

CSI-RS

QUALITY
MEASUREMENT
SECTION
1047

FEEDBACK
INFORMATION
GENERATING
SECTION
1046

FIG. 9

## INTERNATIONAL SEARCH REPORT

| International application No. |
|---|
| PCT/JP2012/079090 |

A. CLASSIFICATION OF SUBJECT MATTER
*H04W28/16(2009.01)i, H04W16/28(2009.01)i*

According to International Patent Classification (IPC) or to both national classification and IPC

B. FIELDS SEARCHED

Minimum documentation searched (classification system followed by classification symbols)
H04W4/00-H04W99/00, H04B7/24-7/26

Documentation searched other than minimum documentation to the extent that such documents are included in the fields searched
Jitsuyo Shinan Koho          1922-1996   Jitsuyo Shinan Toroku Koho   1996-2012
Kokai Jitsuyo Shinan Koho    1971-2012   Toroku Jitsuyo Shinan Koho   1994-2012

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | Nokia, Intra- and inter-cell CoMP, 3GPP TSG-RAN WG1 Meeting #66bis R1-113142, 2011.10.14, 2. Motivations for Intra-cell CoMP | 1-11 |
| Y | 3rd Generation Partnership Project;Technical Specification Group Radio Access Network; Evolved Universal Terrestrial Radio Access (E-UTRA);Physical Channels and Modulation(Release 10), 3GPP TS 36.211 V10.2.0, 2011.06, 6.10.3 UE-specific reference signals | 1-11 |
| Y | 3rd Generation Partnership Project;Technical Specification Group Radio Access Network; Evolved Universal Terrestrial Radio Access (E-UTRA);Physical layer procedures(Release 10), 3GPP TS 36.213 V10.2.0, 2011.06 | 3,4 |

| ☒ Further documents are listed in the continuation of Box C. | ☐ See patent family annex. |
|---|---|

\*    Special categories of cited documents:
"A"   document defining the general state of the art which is not considered to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
|---|---|
| 22 November, 2012 (22.11.12) | 04 December, 2012 (04.12.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| | International application No. |
|---|---|
| | PCT/JP2012/079090 |

C (Continuation).    DOCUMENTS CONSIDERED TO BE RELEVANT

| Category* | Citation of document, with indication, where appropriate, of the relevant passages | Relevant to claim No. |
|---|---|---|
| P,A | Ericsson, ST-Ericsson, Flexible Scrambling Sequence Configuration, 3GPP TSG-RAN WG1 #67 R1-114259, 2011.11.18 | 1-11 |

Form PCT/ISA/210 (continuation of second sheet) (July 2009)

## REFERENCES CITED IN THE DESCRIPTION

**Patent documents cited in the description**

- JP 2011246874 A

**Non-patent literature cited in the description**

- Feasibility Study for Evolved UTRA and UTRAN. *3GPP, TR25.912 (V7.1.0),* September 2006